# EUROPEAN PATENT SPECIFICATION

(11) **EP 0 557 547 B1**
(45) Date of publication and mention of the grant of the patent: **24.05.1995**
(21) Application number: 92103211.6
(22) Date of filing: 26.02.1992
(51) Int. Cl.: B60T 17/02

(54) **Air brake system for a vehicle**
Druckluftbremssystem für Kraftfahrzeug
Système de freinage à air comprimé pour véhicules

(43) Date of publication of application: 01.09.1993
(73) Proprietor: Tseng, Chei-Su, Koahsiung (TW); Tseng, Lain-Chei, Kaohsiung (TW)
(72) Inventor: Tseng, Chei-Su, Koahsiung (TW); Tseng, Lain-Chei, Kaohsiung (TW)
(74) Representative: LOUIS, PÖHLAU, LOHRENTZ & SEGETH

(56) References cited:
- DE-A- 3 011 360
- DE-A- 3 307 327
- DE-A- 3 405 965
- DE-B- 1 294 089

## Description

The invention relates to an air brake system for a vehicle according to the preamble of claim 1.

Air brake systems are used for vehicles such as trucks and trailers, and comprise a compressor for pressurizing air which is introduced to operate the brake of the vehicle. However, the pressurized air will be exhausted quickly if the brake of the vehicle is continuously operated for a short period of time, for example, when the vehicle moves downward a hill. The brake system will fail if the pressurized air is not sufficient. This is dangerous. In addition, it takes a long time for the compressor to replenish the air tank, and therefore the vehicle needs to be parked in order to wait until the air tank is filled up again.

German patent document DE-A-3 405 965 discloses a system in which one of the cylinders of a vehicle is used to generate pressurized air when the pressure in the air tank is insufficient and said cylinder acts as a normal combustion cylinder when the replenishment of a pressurized air is finished. However, in such system, the output power of the engine is adversely affected since said cylinder cannot output power until replenishment of pressurized air is completed.

The objective of the invention is to provide an air brake system for a vehicle in which the pressurized air can be supplied from the engine to the air tank, and the brake system of the vehicle can be operated continuously without parking of the vehicle.

This objective is solved by the features in the characterizing clause of claim 1.

According to the invention such replenishment of pressurized air is proceeded when the foot pedal is not depressed thereby not affecting output power of the engine.

Advantageous embodiments of the invention are stated in the sub-claims.

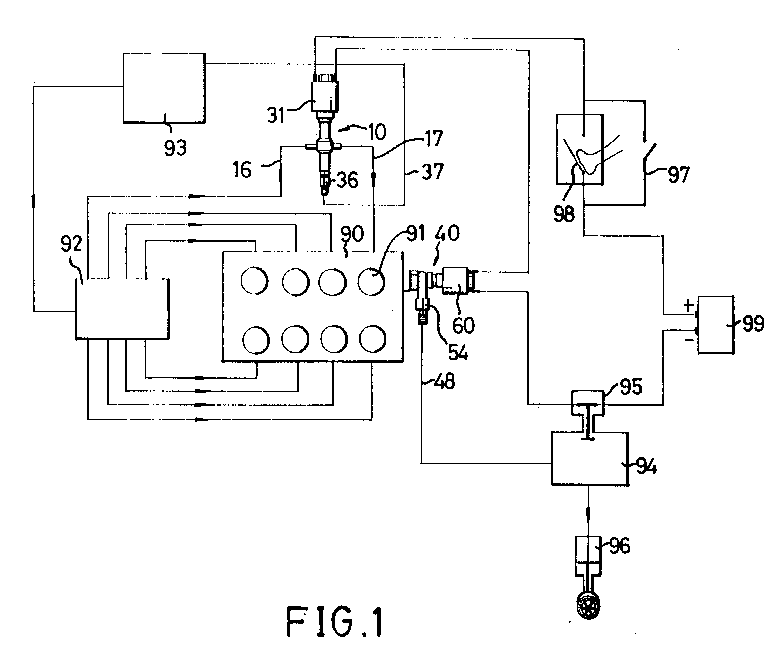

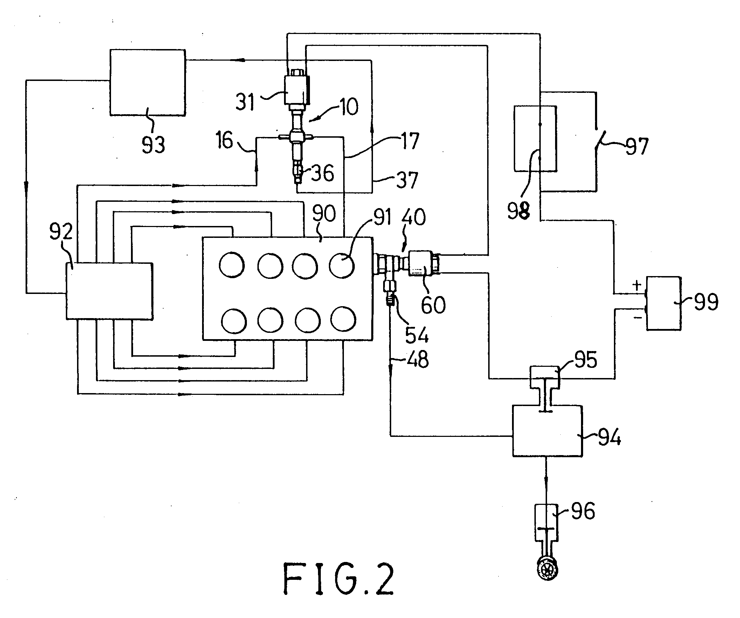

The invention will be now described in further detail by the add of the drawings in which:
FIGS. 1 and 2 are schematic views of an air brake system illustrating the operation thereof;
FIG. 3 is an exploded view of a valve;
FIGS. 4 and 5 are cross sectional views of the valve as shown in FIG. 3;
FIG. 6 is an exploded view of another valve; and
FIGS. 7 and 8 are cross sectional views of the valve as shown in FIG. 6
Referring to FIGS. 1 and 2, a typical large vehicle, such as truck or trailer, comprises a fuel injected engine, such as an eight- cylinder Diesel engine 98, a fuel pump 92 for supplying fuel to each of the cylinders 91, a fuel tank 93 for storing fuel and for supplying fuel to the fuel pump 92, and an air tank 94 for storing and supplying pressurized air to the brake mechanism 96. The brake mechanism 96 can be controlled by an accelerator pedal 98 disposed in the driver's cab. The vehicle also includes a battery 99.

An air brake system comprises a first valve means 10 for switching the fuel either to one cylinder 91 of the engine 90 (FIG.1) or to the fuel tank 93 (FIG.2); and a second valve means 40 for controlling the flow of the pressurized air from the cylinder 91 to the air tank 94. A switch 95 is electrically coupled between the battery 99 and the second valve means 40 and is coupled to the air tank 94. The switch 95 is a safety switch and will be switched off when the pressure of the air tank 94 reaches a predetermined value, such that the air tank 94 can be prevented from becoming over- pressurized. A switch 97 is also electrically connected between the battery 99 and the first valve means 10 and is connected in parallel to the switch formed by the foot pedal 98 of the vehicle, which will be described in further detail hereinafter.

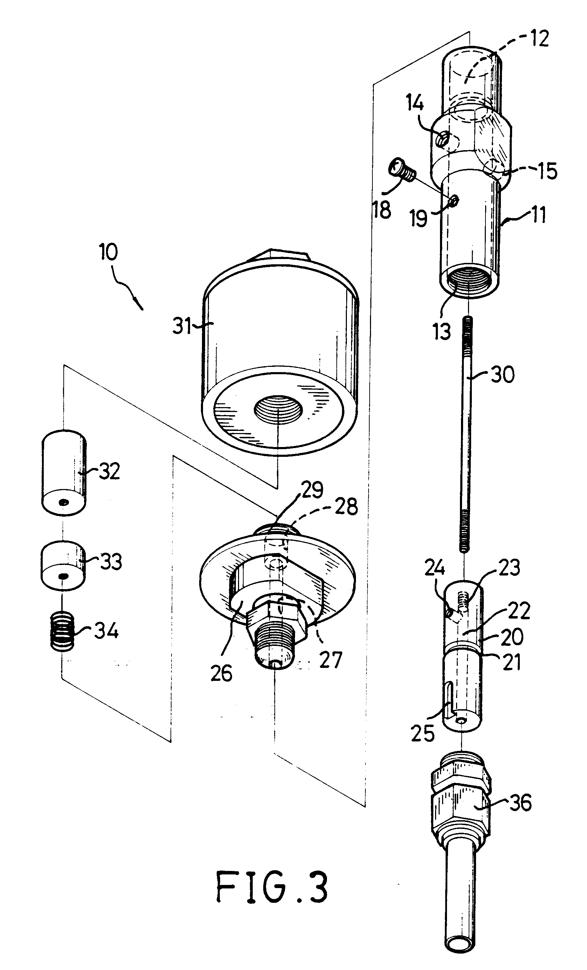

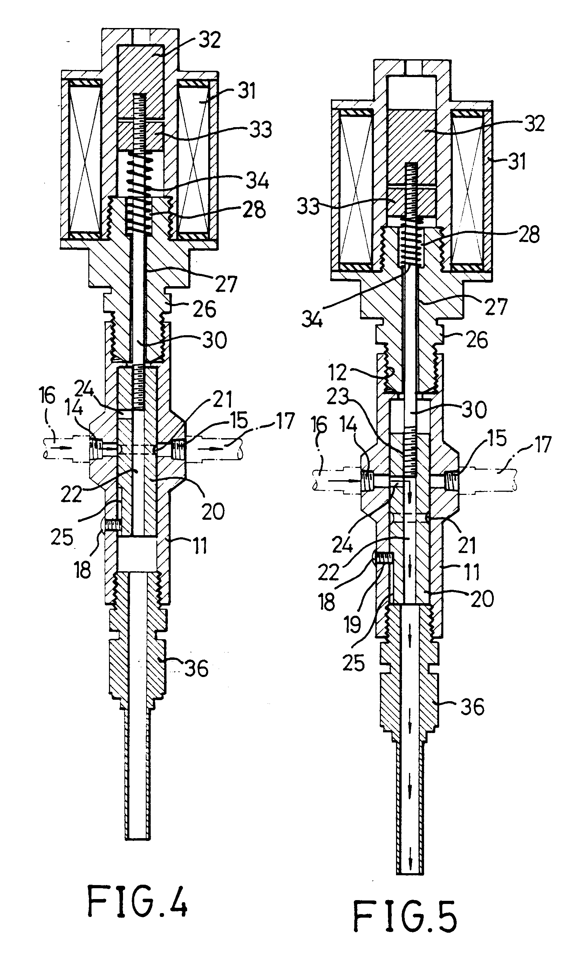

Referring next to FIGS. 3 and 4, the first valve means 10 includes a tube 11 having a hollow interior and having an inner thread 12, 13 formed in the upper and lower portion, two screw holes 14, 15 formed in the middle portion of the tube 11 and communicated with the hollow interior of the tube 11, a first pipe 16 having one end threaded to the screw hole 14 and having the other end connected to the fuel pump 92, a second pipe 17 having one end threaded to the screw hole 15 and having the other end connected to the cylinder 91 of the engine 90 (FIG. 1), and a screw 18 threadedly engaged in a screw hole 19 formed in the tube 11.

A guide 20 is slidably engaged in the hollow interior of the tube 11 and includes an annular groove 21 formed in the middle portion thereof and a bore 22 longitudinally formed therein, an inner thread 23 formed in the upper portion of the bore 22, a passage 24 laterally formed in the upper portion of the guide 20 and communicated with the bore 22 of the guide 20. A slot 25 is formed in the lower portion of the outer peripheral portion of the guide 20 and extends in a longitudinal direction of the guide. The screw 18 is slidably engaged in the slot 25 so that the guide 20 can be guided to slide longitudinally in the tube 11 and is prevented from rotation relative to the tube 11. A coupler 26 has a lower end threadedly engaged to the inner thread 12 of the tube 11 and includes a bore 27 longitudinally formed therein, a cavity 28 of larger diameter than that of the bore 27 being formed in the upper portion of the coupler 26. The coupler 26 includes an outer thread 29 formed on the upper portion of the outer peripheral portion thereof.

A rod 30 is slidably engaged in the bore 27 of the coupler 26 and has a lower end threadedly engaged to the inner thread 23 of the guide 20 so that the rod 30 and the guide 20 move in concert. A solenoid 31 is threadedly engaged on the outer thread 29 of the coupler 26 and includes a core 32 and a stub 33 slidably engaged therein. The upper end of the rod 30 is threadedly engaged through the stub 33 and is threaded to the core 32 so that the guide 20 moves in concert with the core 32. A spring 34 is disposed in the cavity 28 of the coupler 26 for biasing the core 32 and the stub 33 upward, as shown in FIG. 4. The stub 33 is movable longitudinally along the rod 30 so that the resilient force of the spring 34 applied to the stub 33 can be adjusted. A connector 36 is threaded to the inner thread 13 of the tube 11 and is connected to the fuel tank 93 by a pipe 37, best shown in FIGS. 1 and 2.

In operation, as shown in FIG. 4, the pipes 16, 17 are communicated with each other by the annular groove 21 of the guide 20 when the core 32 and stub 33 are biased upward by the spring 34, such that the fuel from the fuel pump 92 can be guided to flow to the cylinder 91 of the engine 90, best shown in FIG. 1, and such that the engine 90 can be operated as normal. However, as shown in FIG. 5, the guide 20 and the core 32 are caused to move downward when the solenoid 31 is activated, such that the pipe 16 is communicated with the passage 24 of the guide 20 and such that the fuel from the fuel pump 92 can be guided to flow to the fuel tank 93 via the connector 36 and the pipe 37, best shown in FIG. 2. At this moment, no fuel is supplied into the cylinder 91 such that no explosion is generated within the cylinder 91. Pressurized air can thus be generated by the reciprocating actions of the piston (not shown) of the cylinder 91.

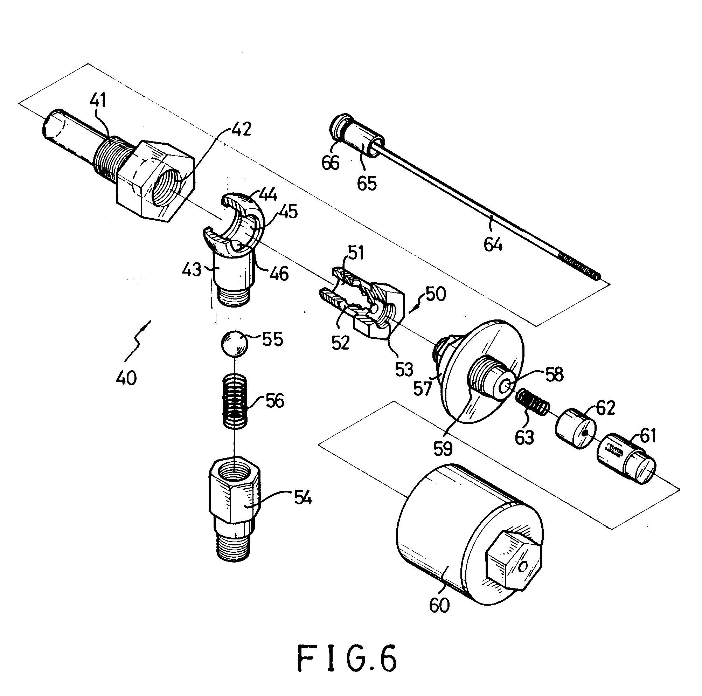

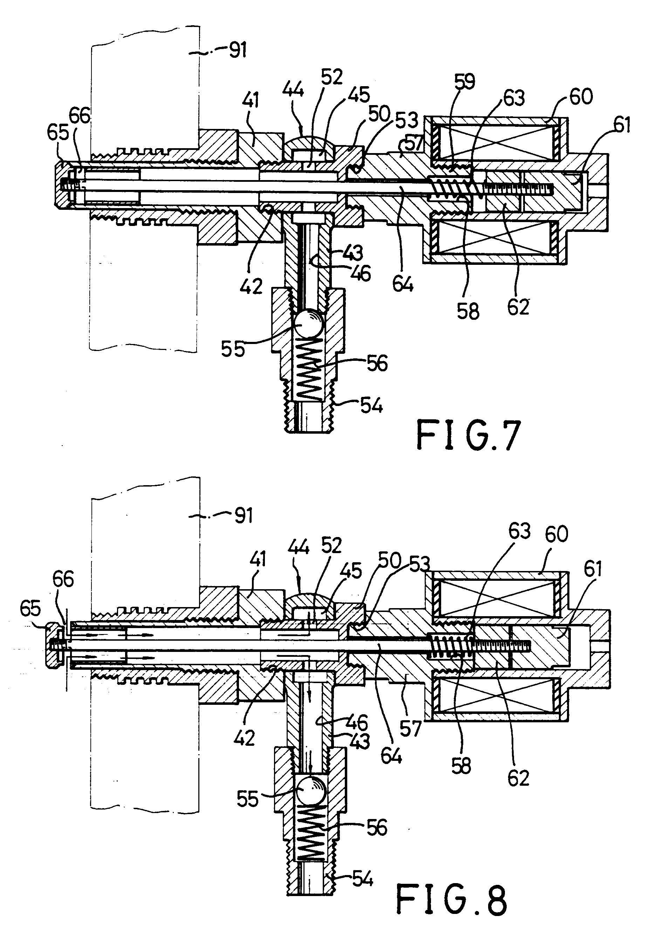

Referring next to FIGS. 6 and 7, the second valve means 40 includes a connector 41 threadedly engaged to the cylinder 91 of the engine 90 and extended into the combustion chamber of the cylinder 91 and having an inner thread 42 formed therein, a member 43 having a ring 44 formed integrally thereon and having a bore 46 formed therein, the ring 44 including an annular recess 45 formed therein and communicated with the bore 46 of the member 43, and a bolt 50 having one end passing through the ring 44 and threadedly engaged to the inner thread 42 of the connector 41 so that the ring 44 and the member 43 can be fixed in place. The bolt 50 includes a bore 51 longitudinally formed therein, at least one aperture 52 laterally formed therein and communicated with the bore 51, and an inner thread 53 formed in the other end thereof. The aperture 52 communicates the bore 51 of the bolt 50 to the annular recess 45 of the ring 44. A check valve 54 is threaded to the lower end of the member 43 and includes a ball 55 and a spring 56 disposed therein, the ball 55 is biased by the spring 56 to close the lower end of the member 43. The check valve 54 is coupled to the air tank 94 by a pipe 48 (FIGS. 1 and 2). A coupler 57 has one end threadedly engaged to the inner thread 53 of the bolt 50 and includes a cavity 58 formed in the other end and an outer thread 59 formed on the outer peripheral portion of the other end thereof.

A solenoid 60 is threaded to the outer thread 59 of the coupler 57 and includes a core 61 and a stub 62 slidably engaged therein, a spring 63 is disposed in the cavity 58 of the coupler 57 for biasing the stub 62 and the core 61 away from the coupler 57. A rod 64 has one end threaded through the stub 62 and threadedly engaged with the core 61 of the solenoid 60 so that the rod 64 and the core 61 move in concert. The stub 62 is movable relative to the rod 64 so as to adjust the resilient force and the compression of the spring 63. The rod 64 further includes a plug 65 formed on the other end thereof and extended within the cylinder 91. The plug 65 includes an orifice 66 formed therein. The plug 65 can be caused to close the connector 41 when the rod 64 and the stub 62 are biased by the spring 63 to move away from the coupler 57.

In operation, as shown in FIG. 7, the connector 41 is closed by the plug 65 when the stub 62 and the rod 64 are biased away from the coupler 57, such that the cylinder 91 is enclosed. However, as shown in FIG. 8, the plug 65 is caused to move inwards of the cylinder 91 when the solenoid 60 is activated, such that the pressurized air generated in the cylinder 91 may flow into the connector 41 via the orifice 66, and may flow into the air tank 94 via the check valve 54 and the pipe 48, as shown in FIG. 2. The pressurized air is prevented from flowing backwards into the cylinder 91 by the check valve 54.

Referring again to FIG. 1, the solenoids 31 and 60 are deactivated when the foot pedal 98 is depressed by the driver. At this moment, the pipes 16, 17 are communicated with each other such that fuel is supplied to the cylinder 91 by the fuel pump 92 and such that cylinder 91 can be operated as other cylinders do. The connector 41 is closed by the plug 65 such that the cylinder 91 is closed. However, as shown in FIG. 2, when the foot pedal 98 is not depressed, the solenoids 31 and 60 are activated such that the fuel from the pipe 16 is guided to flow into the fuel tank 93 via the pipe 37 such that no fuel is supplied into the cylinder 91 and such that no explosion will be generated within the cylinder 91 and such that pressurized air will be generated by the cylinder 91. At this moment, the plug 65 is caused to move into the cylinder 91 such that the pressurized air can flow into the air tank 94. The solenoids 31, 60 will be deactivated when the pressure within the air tank 94 reaches a predetermined value and when the safety switch 95 is switched off.

When the foot pedal 98 is depressed by the driver and when it is required to fill the air tank 94, the solenoids 31, 60 can also be activated when the switch 97 is switched on by the driver manually.

Accordingly, the air brake system includes an air tank 94 into which pressurized air can be supplied from the cylinder 91. The pressurized air can also be supplied into the air tank 94 when the vehicle is moving and when the switch 97 is switched on. The vehicle thus need not to be stopped in order to fill the air tank 94. The cylinder 91 may generate pressurized air rapidly such that the air tank 94 can be filled up rapidly.

## Claims

1. An air brake system for a vehicle comprising an air tank (94), a fuel tank (93), a fuel pump (92), a fuel injected engine (90) including a plurality of cylinders, a first valve means (10) for switching fuel from said fuel pump to either said fuel tank (93) or one of the cylinders (91), a second valve means (40) coupled between a combustion chamber of said cylinder (91) and said air tank (94) which is connected to a brake mechanism (96), a check valve (54) is mounted between said second valve means (40) and said air tank (94) to prevent pressurized air in said air tank (94) from flowing back to said second valve means (40), and a safety switch (95) electrically coupled between said first and second valve means (10 and 40) and coupled to said air tank (94) for preventing over-pressurization of said air,tank (94) characterized in that:
a foot pedal (98) is mounted between said safety switch (95) and said first valve means (10), when said pedal (98) is depressed, said first valve means (10) connects to said cylinder (91) such that fuel is supplied to said cylinder (91) for normal combustion, and when said pedal (98) is not depressed, said first valve means (10) connects to said fuel tank such that fuel flows back to said fuel tank (93) and pressurized air generated by said cylinder (91) is outputted to said air tank (94) via said second valve means (40).

2. The air brake system according to claim 1, wherein said first valve means (10) comprises:
a tube (11) including a middle portion having a first pipe (16) coupled to said fuel pump (92) and having a second pipe (17) coupled to said cylinder (91), said tube (11) including a first end coupled to said fuel tank (93);
a solenoid (31) coupled between a second end of said tube (11) and said foot pedal (98) and including a core (32) slidably engaged therein,
a guide (20) slidably engaged in said tube (11) and including an annular groove (21) defined in an outer peripheral portion thereof and a bore (22) longitudinally defined therein;
a passage (24) laterally defined in said guide (20) and communicated with said bore (22) of said guide (20); and
a rod (30) coupled between said guide (20) and said core (32) of said solenoid (31);
said first pipe (16) and said second pipe (17) are connected with each other by said annular groove (21) of said guide (20) when said solenoid (31) is deactivated upon depression of said foot pedal (98) such that said fuel from said fuel pump (92) is guided to flow into said cylinder (91), said first pipe (16) communicates with said bore (22) of said guide (20) via said passage (24) when said solenoid (31) is activated as said foot pedal (98) is not depressed such that said fuel from said fuel pump (92) is guided to flow into said fuel tank (93).

3. The air brake system according to claim 2, wherein:
said tube (11) includes a screw (18) threadedly engaged thereto, said guide (20) includes a slot (25) longitudinally defined in said outer peripheral portion thereof, said screw (18) is slidably engaged in said slot (25) to prevent from relative rotational movement between said guide (20) and said tube (11)

4. The air brake system according to claim 2, wherein:
said solenoid (31) further includes a stub (33) slidably engaged therein and threadedly engaged with said rod (30) such that said stub (33) is movable along said rod (30), and means for biasing said stub (33) away from said tube (11) when said solenoid (31) is deactivated.

5. The air brake system according to claim 4, further comprising a coupler (26) coupled between said solenoid (31) and said tube (11), said coupler (26) including a cavity (28) defined in one end thereof close to said solenoid (31) for accommodating said means for biasing said stub (33) away from said tube (11).

6. The air brake system according to claim 1, wherein said second valve means (40) comprises:
a connector (41) threadedly engaged to said cylinder (91);
a member (43) including a first bore (46) defined therein and a ring (44) integrally formed on a first end thereof, said check valve (54) is coupled between said air tank (94) and a second end of said member (43), said ring (44) including an annular recess (45) defined therein and communicated with said first bore (46) of said member (43);
a bolt (50) passing through said ring (44) and coupling said ring (44) to said connector (41), said bolt (50) including a second bore (51) longitudinally defined therein and at least one aperture (52) laterally defined therein and communicated with said annular recess (45) of said ring (43);
a solenoid (60) coupled to said bolt (50) and including a core (61) slidably engaged therein, said core (61) moves toward said bolt (50) when said solenoid (60) is activated as said accelerator pedal (98) is not depressed, and a rod (64) including a first end coupled to said core (61) of said solenoid (60) and a second end having a plug (65) provided thereto, said plug (65) is opened when said solenoid (60) is activated such that pressurized air generated by said cylinder (91) is guided to flow into said air tank (94).

7. The air brake system according to claim 6, wherein said solenoid (60) further includes a stub (62) slidably engaged therein and threadedly engaged with said rod (64) such that said stub (62) is movable along said rod (64), and means for biasing said stub (62) away from said bolt (50) when said solenoid (60) is deactivated upon depression of said accelerator pedal (98).

8. The air brake system according to claim 7, further comprising a coupler (57) coupled between said solenoid (60) and said bolt (50), said coupler (57) including a cavity (58) defined in one end thereof close to said solenoid (60) for accommodating said means for biasing said stub (62) away from said bolt (50).

## Patentansprüche

1. Druckluftbremssystem für ein Fahrzeug, das versehen ist mit einem Lufttank (94), einem Kraftstofftank (93), einer Kraftstoffpumpe (92), einem Einspritzmotor (90) mit mehreren Zylindern, einem ersten Ventilmittel (10) zum Leiten von Kraftstoff von der Kraftstoffpumpe entweder zum Kraftstofftank (93) oder zu einem der Zylinder (91), einem zweiten Ventilmittel (40), das zwischen einer Verbrennungskammer des Zylinders (91) und dem mit einem Bremsmechanismus (96) verbundenen Lufttank (94) eingefügt ist, wobei zwischen dem zweiten Ventilmittel (40) und dem Lufttank (94) ein Rückschlagventil (54) angebracht ist, mit dem verhindert wird, daß mit Druck beaufschlagte Luft im Lufttank (94) zum zweiten Ventilmittel (40) zurückströmt, und einem Sicherheitsschalter (95) der zwischen das erste und das zweite Ventilmittel (10 bzw. 40) elektrisch geschaltet ist und mit dem Lufttank (94) verbunden ist, um einen Überdruck im Lufttank (94) zu verhindern, dadurch gekennzeichnet, daß:
zwischen dem Sicherheitsschalter (95) und dem ersten Ventilmittel (10) ein Fußpedal (98) angebracht ist, wobei das erste Ventilmittel (10) dann, wenn das Pedal (98) niedergedrückt ist, mit dem Zylinder (91) in der Weise verbunden wird, daß zum Zylinder (91) für eine normale Verbrennung Kraftstoff geliefert wird, und dann, wenn das Pedal (98) nicht niedergedrückt ist, mit dem Kraftstofftank in der Weise verbunden wird, daß Kraftstoff zum Kraftstofftank (93) zurückströmt und mit Druck beaufschlagte Luft, die durch den Zylinder (91) erzeugt wird, über das zweite Ventilmittel (40) zum Lufttank (94) ausgegeben wird.

2. Druckluftbremssystem nach Anspruch 1, bei dem das erste Ventilmittel (10) enthält:
eine Röhre (11), die einen Mittelabschnitt mit einem ersten Rohr (16), das mit der Kraftstoffpumpe (92) verbunden ist, sowie einem zweiten Rohr (17), das mit dem Zylinder (91) verbunden ist, enthält, wobei die Röhre (11) ein erstes Ende aufweist, das mit dem Kraftstofftank (93) verbunden ist;
ein Magnetventil (31), das zwischen dem zweiten Ende der Röhre (11) und dem Fußpedal (98) eingefügt ist und einen Kern (32) enthält, der darin in gleitendem Eingriff ist,
eine Führung (20), die in der Röhre (11) in gleitendem Eingriff ist und eine ringförmige Rille (21), die in deren äußerem Umfangsabschnitt definiert ist, sowie eine Bohrung (22) enthält, die darin in Längsrichtung definiert ist;
einen Durchlaß (24), der in der Führung (20) in seitlicher Richtung definiert ist und mit der Bohrung (22) der Führung (20) in Verbindung steht; und
eine Stange (30), die zwischen der Führung (20) und dem Kern (32) des Magnetventils (31) eingefügt ist;
wobei das erste Rohr (16) und das zweite Rohr (17) durch die ringförmige Rille (21) der Führung (20) miteinander verbunden sind, wenn das Magnetventil (31) beim Niederdrücken des Fußpedals (98) deaktiviert ist, so daß der Kraftstoff von der Kraftstoffpumpe (92) so geführt wird, daß er in den Zylinder (91) strömt, wobei das erste Rohr (16) mit der Bohrung (22) der Führung (20) über den Durchlaß (24) in Verbindung steht, wenn das Magnetventil (31) aktiviert ist, wenn das Fußpedal (38) nicht niedergedrückt ist, so daß der Kraftstoff von der Kraftstoffpumpe (92) so geführt wird, daß er in den Kraftstofftank (93) strömt.

3. Druckluftbremssystem nach Anspruch 2, bei dem:
die Röhre (11) eine Schraube (18) enthält, die in sie geschraubt ist, wobei die Führung (20) einen Schlitz (25) enthält, der in deren äußerem Umfangsbereich in Längsrichtung definiert ist, wobei die Schraube (18) im Schlitz (25) in gleitendem Eingriff ist, um eine relative Drehbewegung zwischen der Führung (20) und der Röhre (11) zu verhindern.

4. Druckluftbremssystem nach Anspruch 2, bei dem:
das Magnetventil (31) ferner einen Stummel (33), der darin in gleitendem Eingriff ist und mit der Stange (30) verschraubt ist, so daß der Stummel (33) längs der Stange (30) beweglich ist, sowie ein Mittel enthält, das den Stummel (33) in einer Richtung weg von der Röhre (11) vorbelastet, wenn das Magnetventil (31) deaktiviert ist.

5. Druckluftbremssystem nach Anspruch 4, das ferner eine Kupplung (26) enthält, die zwischen das Magnetventil (31) und die Röhre (11) gekoppelt ist, wobei die Kupplung (26) einen Hohlraum (28) enthält, der in einem Ende in der Nähe des Magnetventils (31) definiert ist, und das Mittel für die Vorbelastung des Stummels (33) weg von der Röhre (11) aufnimmt.

6. Druckluftbremssystem nach Anspruch 1, bei dem das zweite Ventilmittel (40) enthält:
einen Verbinder (41) der mit dem Zylinder (91) verschraubt ist;
ein Element (43) das eine darin definierte erste Bohrung (46) sowie einen an einem ersten Ende hiervon einteilig ausgebildeten Ring (44) enthält, wobei das Rückschlagventil (54) zwischen dem Lufttank (94) und einem zweiten Ende des Elementes (43) eingefügt ist, wobei der Ring (44) eine darin definierte ringförmige Aussparung (45) enthält, die mit der ersten Bohrung (46) des Elements (43) in Verbindung steht;
einen Schraubbolzen (50), der durch den Ring (44) verläuft und den Ring (44) mit dem Verbinder (41) verbindet, wobei der Schraubbolzen (50) eine zweite Bohrung (51), die darin in Längsrichtung definiert ist, sowie wenigstens eine Öffnung (52) enthält, die darin in seitlicher Richtung definiert ist und mit der ringförmigen Aussparung (45) des Rings (43) in Verbindung steht;
ein Magnetventil (60), das mit dem Schraubbolzen (50) verbunden ist und einen Kern (61), der darin in gleitendem Eingriff ist und sich zum Schraubbolzen (50) bewegt, wenn das Magnetventil (60) aktiviert ist, wenn das Gaspedal (98) nicht niedergedrückt ist, sowie eine Stange (64) enthält, die mit einem ersten Ende mit dem Kern (61) des Magnetventils (60) verbunden ist und an ihrem zweiten Ende mit einem Stopfen (65) versehen ist, wobei der Stopfen (65) geöffnet ist, wenn das Magnetventil (60) aktiviert ist, so daß vom Zylinder (91) erzeugte mit Druck beaufschlagte Luft so geführt wird, daß sie in den Lufttank (94) strömt.

7. Druckluftbremssystem nach Anspruch 6, bei dem das Magnetventil (60) ferner einen Stummel, der darin in gleitendem Eingriff ist und mit der Stange (64) verschraubt ist, so daß der Stummel (62) längs der Stange (64) beweglich ist, sowie ein Mittel enthält, das den Stummel (62) in einer Richtung weg vom Schraubbolzen (50) vorbelastet, wenn das Magnetventil (60) beim Niederdrücken des Gaspedals (98) deaktiviert ist.

8. Druckluftbremssystem nach Anspruch 7, das ferner eine Kupplung (57) enthält, die zwischen dem Magnetventil (60) und dem Schraubbolzen (50) eingefügt ist, wobei die Kupplung (57) einen in einem ihrer Enden in der Nähe des Magnetventils (60) definierten Hohlraum (58) enthält, der das Mittel für die Vorbelastung des Stummels (62) weg vom Schraubbolzen (50) aufnimmt.

## Revendications

1. Système de frein pneumatique pour véhicule comprenant un réservoir d'air (94), un réservoir de carburant (93), une pompe à carburant (92), un moteur à injection de carburant (90) comportant plusieurs cylindres, un premier ensemble à soupape (10) pour envoyer le carburant depuis ladite pompe à carburant soit audit réservoir de carburant (93), soit à l'un des cylindres (91), un second ensemble à soupape (40) couplé entre une chambre de combustion dudit cylindre (91) et ledit réservoir d'air (94) qui est relié à un mécanisme de freinage (96), une soupape de contrôle (54), montée entre ledit second ensemble à soupape (40) et ledit réservoir d'air (94), pour empêcher l'air sous pression dudit réservoir d'air (94) de retourner audit second ensemble à soupape (40), et un commutateur de sécurité (95) relié électriquement entre lesdits premier et second ensembles à soupape (10 et 40) et relié audit réservoir d'air (94) pour empêcher la surpression dudit réservoir d'air (94), caractérisé en ce que :
une pédale à pied (98) est montée entre ledit commutateur de sécurité (95) et ledit premier ensemble à soupape (10), quand ladite pédale (98) est enfoncée, ledit premier ensemble à soupape (10) connecte ledit cylindre (91) de telle sorte que le carburant est alimenté audit cylindre (91) pour une combustion normale, et quand ladite pédale (98) n'est pas enfoncée, ledit premier ensemble à soupape (10) connecte ledit réservoir de carburant, de telle sorte que le carburant reflue audit réservoir de carburant (93) et l'air sous pression créé par ledit cylindre (91) est expulsé vers ledit réservoir d'air (94) par l'intermédiaire dudit second ensemble à soupape (40).

2. Système de [rein pneumatique selon la revendication 1, dans lequel le premier ensemble à soupape (10) comprend :
un tube (11) comportant une portion médiane d'où partent une première tubulure (16) reliée à ladite pompe à carburant (92) et une seconde tubulure (17) reliée audit cylindre (91), ledit tube (11) présentant une première extrémité reliée audit réservoir de carburant (93) ;
un solénoïde (31) couplé entre une seconde extrémité dudit tube (11) et ladite pédale à pied (98), et à l'intérieur duquel peut coulisser un noyau (32) ;
un guide (20) pouvant coulisser à l'intérieur dudit tube (11) et présentant une gorge annulaire (21) dans une zone périphérique extérieure et un alésage longitudinal (22) ;
un passage latéral (24) pratiqué dans ledit guide (20) et communiquant avec ledit alésage (22) dudit guide (20) ;
une tige (30) couplée entre ledit guide (20) et ledit noyau (32) dudit solénoïde (31) ;
ladite première tubulure (16) et ladite seconde tubulure (17) étant connectées l'une à l'autre par ladite gorge annulaire (21) dudit guide (20) quand ledit solénoïde (31) est désactivé par enfoncement de ladite pédale à pied (98) de telle sorte que le carburant provenant de ladite pompe à carburant (92) est guidé de manière à s'écouler dans ledit cylindre (91); ladite première tubulure (16) communiquant avec ledit alésage (22) dudit guide (20) par l'intermédiaire dudit passage (24) quand ledit solénoïde (31) est activé si ladite pédale (98) n'est pas enfoncée, de telle sorte que le carburant provenant de ladite pompe à carburant (92) est guidé de manière à s'écouler dans ledit réservoir à carburant (93).

3. Système de frein pneumatique selon la revendication 2, dans lequel, dans ledit tube (11) est vissée une vis (18) et ledit guide (20) présente une fente (25) longitudinale dans sa périphérie extérieure, ladite vis (18) coulissant dans ladite fente (25) pour empêcher un déplacement rotatif relatif entre ledit guide (20) et ledit tube (11).

4. Système de frein pneumatique selon la revendication 2, dans lequel au surplus, un bouchon (33) coulisse à l'intérieur du solénoïde et est vissé sur ladite tige (30), de telle sorte que ledit bouchon (33) se déplace avec ladite tige (30), et des moyens sont prévus pour repousser ledit bouchon (33) du tube (11) quand le solénoïde (31) est désactivé.

5. Système de frein pneumatique selon la revendication 4, comprenant au surplus un accouplement (26) entre ledit solénoïde (31) et ledit tube (11), une cavité (28) étant pratiquée dans une extrémité de cet accouplement voisine dudit solénoïde (31) pour y recevoir lesdits moyens pour repousser ledit bouchon (33) du tube (11).

6. Système de frein pneumatique selon la revendication 1, dans lequel le second ensemble à soupape (40) comprend :
un connecteur (41) vissé dans le cylindre (91) ;
une pièce (43) comportant un premier alésage (46) et une bague (44) solidaire de sa première extrémité, ladite soupape de contrôle (54) étant coupée entre ledit réservoir d'air (94) et la seconde extrémité de cette pièce (43), l'intérieur de ladite bague (44) présentant une rainure annulaire (45), communiquant avec ledit premier alésage (46) de ladite pièce (43) ;
un boulon (50) traversant ladite bague (44) et reliant ladite bague (44) avec ledit connecteur (41), ledit boulon (50) présentant un second alésage (51) le traversant longitudinalement et au moins une ouverture latérale (52) communiquant avec la rainure annulaire (45) de ladite bague (43) ;
un solénoïde (60) coupé audit boulon (50) et dans lequel coulisse un noyau (61), ledit noyau (61) se déplaçant vers ledit boulon (50) quand ledit solénoïde est activé, si la pédale (98) n'est pas enfoncée, une tige (64) dont une première extrémité est coupée audit noyau (61) dudit solénoïde (60) et une seconde extrémité comporte un bouchon (65), ledit bouchon (65) étant ouvert quand ledit solénoïde (60) est activé, de telle sorte que l'air sous pression créé dans ledit cylindre (91) est guidé de manière à s'écouler dans ledit réservoir d'air (94).

7. Système de frein pneumatique selon la revendication 6, dans lequel dans ledit solénoïde (60) coulisse un bouchon (62) vissé sur ladite tige (64) de telle sorte que ledit bouchon (62) se déplace avec ladite tige (64), des moyens étant prévus pour repousser ledit bouchon (62) dudit boulon (50) quand le solénoïde (60) est désactivé par enfoncement de la pédale d'accélérateur (98).

8. Système de frein pneumatique selon la revendication 7, comprenant au surplus un accouplement (57) entre ledit solénoïde (60) et ledit boulon (50), une cavité (58) étant pratiquée dans une extrémité de cet accouplement voisine dudit solénoïde, en vue d'y loger lesdits moyens repoussant le bouchon (62) dudit boulon (50).
